# EUROPÄISCHE PATENTANMELDUNG

(11) **EP 4 342 726 A1**
(43) Veröffentlichungstag der Anmeldung: **27.03.2024**
(21) Anmeldenummer: 23196727.4
(22) Anmeldetag: 12.09.2023
(51) Int. Cl.: B60L 58/20, B60L 1/00, B60L 3/00, B60L 7/10, B60L 7/16, B60L 7/02, B60R 16/03, H02J 7/14

(54) **VERFAHREN ZUM BETRIEB EINES KRAFTFAHRZEUGS**

(30) Priorität: 26.09.2022 DE 102022210118
(71) Anmelder: AUDI AG, 85057 Ingolstadt (DE); VOLKSWAGEN AG, 38440 Wolfsburg (DE)
(72) Erfinder: AUER, Richard, 38667 Bad Harzburg (DE); NÄTHER, Holger, 38524 Sassenburg (DE); SCHOBERER, Stefan, 93349 Mindelstetten (DE); STOLZ, Markus, 38471 Rühen (DE)
(74) Vertreter: FDST Patentanwälte

(57) **Zusammenfassung**

Die Erfindung betrifft ein Verfahren (42) zum Betrieb eines Kraftfahrzeugs (2), das ein Hochvoltbordnetz (8) und ein Niedervoltbordnetz (26) umfasst, die mittels eines Gleichspannungswandlers (30) verbunden sind. Das Hochvoltbordnetz (8) ist über eine Schalteinheit (10) mit einer Batterieeinheit (12) verbunden ist, und ein elektromotorischer Hauptantrieb (6) ist mittels des Hochvoltbordnetz (8) gespeist. Mittels der Schalteinheit (10) wird eine elektrische Kontaktierung der Batterieeinheit (12) mit dem Hochvoltbordnetz (8) beendet, und der Hauptantrieb (6) wird generatorisch betrieben, sodass elektrische Energie in das Hochvoltbordnetz (8) eingespeist wird, mittels derer über den Gleichspannungswandler (30) das Niedervoltbordnetz (26) gespeist wird. Die Erfindung betrifft ferner ein Kraftfahrzeug (2) und ein Computerprogrammprodukt (40).

## Beschreibung

Die Erfindung betrifft ein Verfahren zum Betrieb eines Kraftfahrzeugs, das ein Hochvoltbordnetz und ein Niedervoltbordnetz umfasst, die mittels eines Gleichspannungswandlers verbunden sind. Ferner betrifft die Erfindung ein Kraftfahrzeug und ein Computerprogrammprodukt.

Kraftfahrzeuge, wie Personenkraftwagen, weisen für den Vortrieb einen Hauptantrieb auf, wobei der Hauptantrieb in zunehmendem Maße einen Elektromotor umfasst. Hierbei wird beispielsweise lediglich einer oder mehrere Elektromotoren für den Vortrieb des Kraftfahrzeugs herangezogen, sodass das Kraftfahrzeug als Elektrofahrzeug ausgestaltet ist. In einer Alternative hierzu umfasst das Kraftfahrzeug zusätzlich noch einen Verbrennungsmotor.

Für die Bestromung des Elektromotors wird üblicherweise ein Hochvoltbordnetz herangezogen, das mittels einer als Hochvoltbatterie ausgebildeten Batterieeinheit gespeist ist. Die Hochvoltbatterie selbst weist mehrere Batteriemodule auf, die meist zueinander baugleich sind. Jedes der Batteriemodule weist wiederum mehrere einzelne Batterien auf, von denen einige elektrisch in Reihe und einige elektrisch parallelgeschaltet sind. Somit wird mittels jedes der Batteriemodule eine elektrische Gleichspannung bereitgestellt, die ein Einfaches oder Vielfaches einer der Batterien ist.

Damit die mittels des Elektromotors bereitgestellte Leistung vergleichsweise groß ist, wobei dennoch die mittels des Hochvoltbordnetzes geführten elektrischen Ströme vergleichsweise gering sind, sodass ein Leitungsquerschnitt verringert werden kann, wird mittels des Hochvoltbordnetzes meist eine elektrische Gleichspannung über 400 V führt. Daher weisen derartige Kraftfahrzeuge meist noch zusätzlich ein Niedervoltbordnetz auf, mittels dessen eine elektrische Gleichspannung unter 60 V geführt wird, wie beispielsweise 12 V. Mittels des Niedervoltbordnetz werden hierbei Komponenten bestromt, mittels derer eine Überprüfung des Hochvoltbordnetzes ermöglicht ist, sodass eine Fehlfunktion des Hochvoltbordnetzes und/oder der Hochvoltbatterie feststellbar ist. In diesem Fall wird meist das Hochvoltbordnetz stillgesetzt, sodass eine Gefährdung von Personen aufgrund der vergleichsweise hohen, mittels des Hochvoltbordnetzes geführten elektrischen Spannung ausgeschlossen werden kann. Auch werden mittels des Niedervoltbordnetzes weitere Systeme bestromt, die bereits entwickelt sind, und die beispielsweise bereits bei Kraftfahrzeugen genutzt werden, die lediglich einen Verbrennungsmotor aufweisen. Somit ist eine Neuentwicklung von derartigen Systemen, wie beispielsweise einer Multimediaanlage, nicht erforderlich, was zu verringerten Herstellungskosten führt.

Bestimmte Funktionen des Kraftfahrzeugs werden derzeit mechanisch beeinflusst. Hierbei wird von einem Nutzer des Kraftfahrzeugs, wie eines Fahrers, mechanisch eine bestimmte Komponente bewegt, die aufgrund einer mechanischen Kopplung auf weitere Bestandteile des Kraftfahrzeugs wirkt. Hierbei handelt es sich beispielsweise ein Lenksystem, wobei mittels eines Lenkrads eine Fortbewegungsrichtung des Kraftfahrzeugs eingestellt werden kann. Auch ist bei einem Bremssystem eine direkte Kopplung vorhanden, die zumindest teilweise ein Hydrauliksystem nutzt. Die für die entsprechende Kopplung erforderlichen Bauteilen weisen ein vergleichsweise hohes Gewicht auf. Zudem ist aufgrund einer derartigen Kopplung eine Gestaltungsspielraum nicht frei, und so ist beispielsweise die Position einer Lenksäule vorgegeben. Infolgedessen ist eine frei Platzierbarkeit des Lenkrads nicht möglich, und dieses kann beispielsweise nicht beliebig verstaut werden, insbesondere bei einer zumindest zeitweise autonomen Fortbewegung des Kraftfahrzeugs.

Zur Abhilfe hiervon ist es bekannt, mittels eines Sensors die Position des jeweiligen Eingabegeräts, wie des Lenkrads, zu erfassen und in elektrische Signale zu übersetzen. Diese werden mittels einer elektrischen Leitung zu einem Aktor übertragen, mittels dessen dann die direkte Beeinflussung folgt. Somit ist es möglich, das Lenkrad mechanisch von Vorderrädern des Kraftfahrzeugs zu entkoppeln. Auch ist es auf diese Weise möglich, den Aktor unabhängig von dem Eingabegerät zu betätigen, beispielsweise bei einer autonomen Fortbewegung des Kraftfahrzeugs.

Damit einerseits eine Sicherheit für den Nutzer bei einer Fehlfunktion erhöht ist, und damit andererseits eine Wartung des Kraftfahrzeugs erleichtert ist, wird das System, dem der Aktor sowie das Eingabegerät zugeordnet ist, mit dem Niedervoltbordnetz betrieben, zumal die hierfür erforderliche Energie vergleichsweise gering ist. Falls jedoch das Niedervoltbordnetz nicht mehr gespeist wird, werden auch die damit betriebenen Systeme, wie das Lenksystem, nicht mehr gespeist, sodass eine Änderung einer Fortbewegungsrichtung des Kraftfahrzeugs nicht mehr möglich ist. Aus diesem Grund ist es erforderlich, eine Energieversorgung des Niedervoltbordnetzes redundant auszugestalten, was jedoch ein Gewicht und Herstellungskosten erhöht.

Der Erfindung liegt die Aufgabe zugrunde, ein besonders geeignetes Verfahren zum Betrieb eines Kraftfahrzeugs sowie ein besonders geeignetes Kraftfahrzeug als auch ein besonders geeignetes Computerprogrammprodukt anzugeben, wobei vorteilhafterweise eine Sicherheit und/oder ein Komfort erhöht sind, und wobei zweckmäßigerweise Herstellungskosten und/oder ein Gewicht verringert sind.

Hinsichtlich des Verfahrens wird diese Aufgabe durch die Merkmale des Anspruchs 1, hinsichtlich des Kraftfahrzeugs durch die Merkmale des Anspruchs 7 und hinsichtlich des Computerprogrammprodukts durch die Merkmale des Anspruchs 8 erfindungsgemäß gelöst. Vorteilhafte Weiterbildungen und Ausgestaltungen sind Gegenstand der jeweiligen Unteransprüche.

Das Verfahren dient dem Betrieb eines Kraftfahrzeugs. Das Kraftfahrzeug ist bevorzugt landgebunden und weist vorzugsweise eine Anzahl an Rädern auf, von denen zumindest eines, vorzugsweise mehrere oder alle, mittels eines Hauptantriebs angetrieben sind. Vorzugsweise ist der Hauptantrieb vollständig elektrisch ausgestaltet, und das Kraftfahrzeug ist beispielsweise ein Elektrofahrzeug. In einer Alternative weist der Antrieb zusätzlich einen Verbrennungsmotor auf, sodass das Kraftfahrzeug als Hybrid-Kraftfahrzeug ausgestaltet ist. Zumindest jedoch umfasst der Hauptantrieb einen Elektromotor, mittels dessen eine für die Fortbewegung des Kraftfahrzeugs erforderliche Kraft bereitgestellt wird. Somit handelt es sich bei dem Hauptantrieb um eine elektromotorischen Hauptantrieb.

Geeigneterweise ist eines, vorzugsweise mehrere, der Räder steuerbar ausgestaltet. Somit ist es möglich, das Kraftfahrzeug unabhängig von einer bestimmten Fahrbahn, beispielsweise Schienen oder dergleichen, zu bewegen. Dabei ist es zweckmäßigerweise möglich, das Kraftfahrzeug im Wesentlichen beliebig auf einer Fahrbahn zu positionieren, die insbesondere aus einem Asphalt, einem Teer oder Beton gefertigt ist. Das Kraftfahrzeug ist beispielsweise ein Nutzkraftwagen, wie ein Lastkraftwagen (Lkw) oder ein Bus. Besonders bevorzugt jedoch ist das Kraftfahrzeug ein Personenkraftwagen (Pkw).

Das Kraftfahrzeug weist ein Hochvoltbordnetz auf. Mittels des Hochvoltbordnetzes ist der elektromotorische Hauptantrieb, der im Weiteren auch lediglich als Hauptantrieb bezeichnet wird, gespeist und somit bestromt. Hierfür sind der Hauptantrieb und das Hochvoltbordnetz elektrisch gekoppelt. Bei Betrieb des Hauptantriebs, also falls das Kraftfahrzeug beschleunigt oder zumindest mit einer konstanten Geschwindigkeit bewegt werden soll, wird mittels des Hauptantriebs dem Hochvoltbordnetz elektrische Energie entnommen. Vorzugsweise umfasst der Hauptantrieb einen Umrichter, mittels derer die mittels des Hochvoltbordnetzes bereitgestellte elektrische Spannung in eine Spannung gewandelt wird, die an den Elektromotor angelegt wird, insbesondere etwaige Elektromagneten des Elektromotors. Der Umrichter ist vorzugsweise als Pulswechselrichter ausgestaltet. Insbesondere weist das Hochvoltbordnetz eine Kapazität auf, oder eine Kapazität ist zumindest dem Hochvoltbordnetz zugeordnet, mittels welcher eine Spannungsstabilisierung erfolgt. Somit ist auch bei einem unterschiedlichen Betrieb von mittels des Hochvoltbordnetzes versorgten Bauteilen, wie des Hauptantriebs, des Kraftfahrzeugs eine vergleichsweise stabile elektrische Spannung bereitgestellt.

Das Kraftfahrzeug umfasst eine Batterieeinheit, die ein elektrischer Energiespeicher ist. Vorzugsweise ist die Batterieeinheit eine Hochvoltbatterie oder umfasst diese. Die Batterieeinheit umfasst insbesondere zwei Anschlüsse, die der elektrischen Kontaktierung mit weiteren Bestandteilen des Kraftfahrzeugs dienen. Hierfür sind die Anschlüsse vorgesehen und eingerichtet. Insbesondere liegt zwischen den Anschlüssen bei Betrieb eine bestimmte elektrische Gleichspannung an. Insbesondere ist die an den Anschlüssen anliegende elektrische Spannung zwischen 400 V oder 800 V

Die Batterieeinheit umfasst eine oder mehrere Batterien, die zweckmäßigerweise zueinander baugleich sind. Beispielsweise ist ein Teil der Batterien zueinander parallel und/oder elektrisch in Reihe geschaltet, und die Batterien sind zweckmäßigerweise zwischen die beiden Anschlüsse geschaltet. Vorzugsweise sind die Batterien wiederaufladbar ausgestaltet und somit insbesondere Sekundärbatterien. Die Batterieeinheit umfasst zum Beispiel eines oder mehrerer Batteriemodule, die jeweils mehrere der Batterien umfassen. Zweckmäßigerweise sind die Batteriemodule zueinander baugleich, und jedem Batteriemoduls die gleiche Anzahl an Batterien zugeordnet. Hierbei sind die Batterien jedes Batteriemoduls elektrisch in Reihe und/oder parallelgeschaltet, sodass mittels jedes Batteriemoduls eine bestimmte elektrische Gleichspannung bereitgestellt ist. Zum Beispiel sind die Batteriemodule zueinander baugleich, was Herstellungskosten reduziert. Die Batteriemodule sind zweckmäßigerweise elektrisch in Reihe geschaltet, sodass mittels jedes Unterbereichs das Vielfache der elektrischen Spannung bereitgestellt wird, die mittels jedes der Batteriemodule bereitgestellt ist. Alternativ oder in Kombination hierzu ist zumindest ein Teil der Batteriemodule elektrisch parallelgeschaltet.

Das Hochvoltbordnetz ist über eine Schalteinheit mit der Batterieeinheit verbunden, mittels derer es zweckmäßigerweise möglich ist, eine elektrische Kontaktierung des Hochvoltbordnetzes mit der Batterieeinheit zu erstellen oder zu unterbrechen. Die Schalteinheit weist insbesondere zwei Schalter auf, wobei jedem der Anschlüsse der Batterieeinheit jeweils einer der Schalter zugeordnet ist, die insbesondere nach Art von Schützen ausgestaltet sind. Zumindest jedoch ist einem der Anschlüsse der Batterieeinheit ein entsprechender Schalter zugeordnet. Somit wird bei Öffnen der Schalteinheit eine elektrische Kontaktierung der Batterieeinheit mit dem Hochvoltbordnetz unterbrochen. Falls die Schalteinheit geschlossen ist, also die Batterieeinheit mit dem Hochvoltbordnetz elektrisch kontaktiert ist, ist ein Übertrag von elektrischer Energie zwischen der Batterieeinheit und dem Hochvoltbordnetz möglich, wobei beispielsweise das Hochvoltbordnetz mittels der Batterieeinheit gespeist wird, oder wobei zum Beispiel von dem Hochvoltbordnetz elektrische Energie in die Batterieeinheit transferiert wird, insbesondere bei einem generatorisch Betrieb des Hauptantriebs, wie einer Rekuperation. Insbesondere ist, wenn die Schalteinheit geschlossen ist, die an dem Hochvoltbordnetz anliegende elektrische Spannung gleich der mittels der Batterieeinheit bereitgestellten elektrischen Spannung, also der zwischen den Anschlüssen der Batterieeinheit anliegenden elektrischen Spannung. Zweckmäßigerweise ist der Schalteinheit zudem eine Sicherung oder dergleichen zugeordnet, sodass bei einer Fehlfunktion der Batterieeinheit diese von dem Hochvoltbordnetz getrennt werden kann.

Das Kraftfahrzeug umfasst ferner ein Niedervoltbordnetz, wobei mittels des Niedervoltbordnetzes eine im Vergleich zum Hochvoltbordnetz verringerte elektrische Spannung geführt wird, vorzugsweise eine Gleichspannung. Die elektrische Spannung des Niedervoltbordnetzes beträgt insbesondere 12 V, 24 V oder 48 V. Das Hochvoltbordnetz und das Niedervoltbordnetzes sind mittels eines Gleichspannungswandlers elektrisch verbunden, sodass mittels des Gleichspannungswandlers elektrische Energie zwischen dem Hochvoltbordnetz und dem Niedervoltbordnetz ausgetauscht werden kann. Hierfür wird der Gleichspannungswandler vorzugsweise entweder als Hochsetzsteller oder Tiefsetzsteller betrieben. Beispielsweise weist der Gleichspannungswandler einen Hochsetzsteller und einen Tiefsetzsteller auf, oder dieser weist beispielsweise eine Brückenschaltung mit unterschiedlichen Schaltern auf. Zweckmäßigerweise ist der Gleichspannungswandler als kaskadierter/gestufter Ab-Aufwärtswandler (engl.: Buck-Boost Converter) ausgestaltet.

Das Verfahren sieht vor, dass mittels der Schalteinheit eine elektrische Kontaktierung der Batterieeinheit mit dem Hochvoltbordnetz beendet wird. Mit anderen Worten wird die Batterieeinheit stillgesetzt oder zumindest der elektrische Austausch von Energie zwischen dem Hochvoltbordnetz und der Batterieeinheit beendet. Zum Beispiel wird dabei die Batterieeinheit galvanisch von dem Hochvoltbordnetz getrennt, oder zumindest wird die Schalteinheit derart eingestellt, dass keine Versorgung des Hochvoltbordnetzes mittels der Batterieeinheit mehr erfolgt. Insbesondere wird hierfür einer oder mehrerer der etwaigen Schalter der Schalteinheit geöffnet. Zusammenfassend ist somit zumindest die vollständige elektrische Batterieeinheit nicht mehr mit dem Hochvoltbordnetz elektrisch kontaktiert.

In einem weiteren Arbeitsschritt wird der Hauptantrieb generatorisch betrieben und folglich mittels dessen elektrische Energie bereitgestellt. Hierbei erfolgt ein Abbremsen des Hauptantrieb, sodass mittels des Hauptantriebs mechanische Energie in elektrische Energie gewandelt wird. Insbesondere wird dabei der Elektromotor entsprechend betrieben, und eine Einstellung und/oder Betrieb des etwaigen Umrichters wird entsprechend angepasst. Hierbei erfolgt der Betrieb derart, dass mittels des Hauptantriebs elektrische Energie in das Hochvoltbordnetz eingespeist wird. Somit erfolgt ein Betrieb zumindest eines Teils des Hochvoltbordnetzes mittels des Hauptantriebs. Zumindest jedoch wird mittels eins Teils der mittels des Hauptantriebs bereitgestellten elektrischen Energie der Gleichspannungswandler betrieben und gespeist, und mittels dessen wird die bereitgestellte elektrische Energie in das Niedervoltbordnetz eingespeist. Zusammenfassend wird der Hauptantrieb generatorisch betrieben, sodass elektrische Energie in das Hochvoltbordnetz eingespeist wird, mittels derer über den Gleichspannungswandler das Niedervoltbordnetz gespeist wird.

Infolgedessen ist auch bei getrennter Batterieeinheit, also wenn diesen nicht mit dem Hochvoltbordnetz elektrisch kontaktiert ist, ein Betrieb von mittels des Niedervoltbordnetzes gespeisten Bauteilen des Kraftfahrzeugs ermöglicht. So ist insbesondere bei einem Ausfall oder einer Fehlfunktion der Batterieeinheit dennoch ein Betrieb eines mittels des Niedervoltbordnetzes betriebenen Bauteils des Kraftfahrzeugs möglich, sodass eine Sicherheit und ein Komfort für einen Nutzer des Kraftfahrzeugs erhöht sind. Hierbei ist es nicht erforderlich, eine zusätzliche Energieversorgung für das Niedervoltbordnetz vorzusehen, weswegen Herstellungskosten und ein Gewicht des Kraftfahrzeugs verringert sind. Sofern das Niedervoltbordnetz eine separate Energieversorgung aufweist, wie eine weitere Batterie, sind die Anforderungen an diese reduziert, und diese kann beispielsweise kleiner dimensioniert ausgestaltet werden, was Herstellungskosten reduziert. So ist es beispielsweise möglich, als Energieversorgung einen Kondensator zu verwenden. Ferner ist aufgrund des Verfahrens eine Redundanz gegeben und somit eine Sicherheit erhöht.

Insbesondere wird hierbei das Verfahren lediglich dann durchgeführt, wenn ein Notfall und/oder eine Fehlfunktion der Batterieeinheit/ des Hochvoltbordnetzes vorliegt. Insbesondere ist das Verfahren lediglich in einem Notbetrieb des Kraftfahrzeugs aktiv, also nicht bei einem Normalbetrieb des Kraftfahrzeugs. Alternativ oder in Kombination hierzu wird das Verfahren lediglich dann gestartet, wenn das Kraftfahrzeug noch bewegt wird. In diesem Fall ist insbesondere der generatorische Betrieb des Hauptantriebs möglich, nämlich insbesondere bis zu einem Stillstand des Kraftfahrzeugs. Vorzugsweise wird mittels des Niedervoltbordnetzes ein System betrieben, mittels dessen zumindest teilweise die Fortbewegung des Kraftfahrzeugs und/oder eine Funktion beeinflusst wird, die für die Sicherheit des Kraftfahrzeugs erforderlich ist. Somit ist es aufgrund des Verfahrens möglich, dieses System so lange zu betreiben, bis das Kraftfahrzeug stillsteht. In diesem Fall jedoch ist das Kraftfahrzeug im Wesentlichen in einem sicheren Zustand, und eine Gefährdung aufgrund eines Bewegens des Kraftfahrzeugs findet nicht mehr statt.

Beispielsweise wird mittels des Verfahrens die Fehlfunktion des Batterieeinheit, des Hochvoltbordnetzes oder zumindest das Vorliegen des Notbetriebs und/oder einer Situation, die zu dem Start des Notbetriebs führt, ermittelt. Alternativ hierzu wird dies separat durchgeführt, und das Verfahren wird lediglich dann gestartet. Vorzugsweise erfolgt nach Feststellen des Vorliegens eines dieser Fälle ein im Wesentlichen unverzügliches Beenden der elektrischen Kontaktierung der Batterieeinheit mit dem Hochvoltbordnetz und ein Starten des generatorischen Betriebs des Hauptantriebs. Auf diese Weise wird eine Selbstentladung von etwaigen Kapazitäten des Hochvoltbordnetzes oder dem Hochvoltbordnetz zugeordneten Kapazitäten begrenzt, sodass sich die an dem Hochvoltbordnetz anliegende elektrische Spannung lediglich geringfügig ändert. Somit ist ein im Wesentlichen unveränderter Weiterbetrieb des Gleichspannungswandlers möglich, weswegen Herstellungskosten für diesen verringert sind.

Beispielsweise wird das Verfahren stets durchgeführt, wenn ein Speisen des Niedervoltbordnetzes mittels der Batterieeinheit nicht mehr möglich ist und das Kraftfahrzeug insbesondere bewegt wird. Bevorzugt umfasst das Niedervoltbordnetz einen Energiespeicher, wie insbesondere eine Batterie. Zweckmäßigerweise wird das Verfahren lediglich dann durchgeführt, wenn zusätzlich ein Speisen des Niedervoltbordnetzes mittels des Energiespeichers des Niedervoltbordnetzes nicht möglich ist, beispielsweise weil dieser entladen ist oder eine Fehlfunktion aufweist. Somit ist mittels des Verfahrens eine Redundanz zu dem Energiespeicher des Niedervoltbordnetzes vorhanden, und dieser kann vergleichbare kostengünstig ausgestaltet werden, oder Sicherheitsanforderungen an diesen sind reduziert. Auch ist ein weiterer zusätzlicher Energiespeicher für das Niedervoltbordnetz nicht erforderlich, weswegen ein Gewicht reduziert ist. Auch ist eine Wartung des Kraftfahrzeugs vereinfacht.

Beispielsweise wird der Hauptantrieb derart betrieben, dass ein maximales Bremsmoment aufgebracht wird, sodass das Kraftfahrzeug vergleichsweise schnell zu einem Stillstand gebracht wird. Zum Beispiel wird ein bestimmtes Bremsmoment vorgegeben, entsprechend dessen der Hauptantrieb betrieben wird. Besonders bevorzugt jedoch wird der Hauptantrieb derart betrieben, dass an diesem eine bestimmte elektrische Spannung anliegt. Mit anderen Worten wird der Hauptantrieb insbesondere spannungsgeregelt betrieben. Mit anderen Worten wird die mittels des Hauptantriebs bereitgestellt elektrische Spannung zweckmäßigerweise vorgegeben und vorzugsweise der etwaige Umrichter entsprechend eingestellt.

Geeigneterweise ist die bestimmte, also vorgegebene, elektrische Spannung gleich der (elektrischen) Spannung, die mittels der Batterieeinheit in dem Normalbetrieb bereitgestellt wird, sodass ein im Wesentlichen unveränderter Betrieb des Hochvoltbordnetzes und/oder des Gleichspannungswandler ermöglicht ist. Beispielsweise ist die bestimmte elektrische Spannung, auf die der Hauptantrieb insbesondere geregelt oder zumindest gesteuert wird, konstant, oder diese ist zeitlich veränderlich. Vorzugsweise wird die bestimmte elektrische Spannung von der zum Zeitpunkt des Starts des generatorischen Betriebs des Hauptantriebs am Hochvoltbordnetz anliegenden elektrische Spannung auf die elektrische Spannung angepasst, die im Normalbetrieb mittels der Batterieeinheit bereitgestellt wird, und von der die aktuell anliegende elektrische Spannung aufgrund einer Selbstentladung abweicht. Vorzugswiese erfolgt hierbei eine im Wesentlichen lineare Anpassung.

Insbesondere ist das mittels des Hauptantriebs bereitgestellte Bremsmoment, das sich aufgrund des generatorischen Betriebs ergibt, geringer als ein Bremsmoment, das maximal mittels des Hauptantriebs aufgebracht werden könnte. Folglich wird das Kraftfahrzeug noch für eine bestimmte Zeitspanne bewegt oder ist bewegbar. Aufgrund des spannungsgeregelten Betriebs des Hauptantriebs ist es dabei möglich, dass ein Wirkungsgrad verschlechtert ist, insbesondere sofern noch zusätzlich als weitere Nebenbedingungen ein bestimmtes Bremsmoment aufgebracht werden soll. Sofern jedoch als bestimmte elektrische Spannung die mittels der Batterieeinheit im Normalbetrieb bereitgestellte elektrische Spannung verwendet wird, ist eine Anpassung von weiteren Komponenten des Kraftfahrzeugs nicht erforderlich, sodass das Verfahren auch bei einem bereits hergestellten Kraftfahrzeug umsetzbar ist. Alternativ oder in Kombination wird bei der Regelung des generatorischen Betriebs ein bestimmter Wirkungsgrad vorgegeben, der insbesondere vergleichsweise gering ist. Hierbei erfolgt beispielsweise eine Regelung auf den Wirkungsgrad, oder dieser wird als Nebenbedingungen herangezogen. Aufgrund eines derart verschlechterten Wirkungsgrads ist die in das Hochvoltbordnetz eingespeiste elektrische Energie verringert, wobei dennoch eine vergleichsweise starke Abbremsung des Kraftfahrzeugs erfolgt. Hierbei ist jedoch eine Ausbildung einer Überspannung in dem Hochvoltbordnetz aufgrund der eingespeisten Energie vermieden.

Beispielsweise wird ein Betrieb von weiteren Bestandteilen des Kraftfahrzeugs bei der Durchführung des Verfahrens nicht abgeändert. Besonders bevorzugt jedoch wird ein Teil von mittels des Hochvoltbordnetzes und/oder des Niedervoltbordnetzes betriebenen Verbrauchern stillgesetzt. Hierbei wird insbesondere eine elektrische Kontaktierung dieser mit dem jeweiligen Bordnetz beendet und diese somit nicht mehr betrieben. Beim Beenden der elektrischen Kontaktierung erfolgt jedoch insbesondere keine galvanische Trennung, sondern es wird insbesondere lediglich ein elektrischer Stromfluss zwischen dem jeweiligen Verbraucher und dem jeweiligen Bordnetz unterbunden. Vorzugsweise werden lediglich diejenige Verbraucher, wie Systeme und/oder Assistenzsysteme, weiter betrieben, die einen Einfluss auf eine Bewegung des Kraftfahrzeugs und/oder eine Sicherheit des Kraftfahrzeugs aufweisen, weiter betrieben, wohingegen diejenigen Verbraucher, die lediglich zur Bereitstellung von einem Komfort vorhanden sind, stillgesetzt werden. So wird beispielsweise eine Heizung abgeschaltet. Alternativ oder in Kombination hierzu wird beispielsweise eine Multimediaanlage und/oder eine Sitzverstellung stillgesetzt. Folglich wird die aufgrund des generatorischen Betrieb des Hauptantriebs vorhandene elektrische Energie im Wesentlichen vollständig den für die Bereitstellung von Sicherheit erforderlichen Verbrauchern zur Verfügung gestellt, weswegen eine Sicherheit weiter erhöht ist. Beispielsweise wird hierbei ein Klimakompressor noch weiter betrieben, mittels dessen zum Beispiel eine Kühlung der Batterieeinheit erfolgt, sodass insbesondere eine thermische Überbelastung dieser verhindert ist. Zweckmäßigerweise wird ein Scheibenwischer und/oder ein Abblendlicht weiter betrieben, sodass der Fahrer des Kraftfahrzeugs die Umgebung wahrnehmen kann.

Besonders bevorzugt werden sämtliche Systeme/Assistenzsysteme, mittels derer die Fortbewegung des Kraftfahrzeugs beeinflusst wird, weiter betrieben. Alternativ oder in Kombination hierzu wird beispielsweise auch ein System, mittels dessen ein Aufprall des Kraftfahrzeugs auf ein Hindernis erfasst werden kann, ein Airbag oder sonstige Sensoren, die zur Bereitstellung von Sicherheit oder Sicherheitsfunktionen dienen, noch weiter betrieben.

Insbesondere werden sogenannte "X by wire" - Systeme, bei denen mittels eines Sensors eine Position und/oder Bedienung eines Eingabegeräts erfasst und ein elektrisches Signal erzeugt wird, anhand dessen eine Ansteuerung eines Aktors erfolgt, weiter aufrechterhalten. Insbesondere wird ein Lenksystem mittels der mittels des Niedervoltbordnetzes bereitgestellten Energie weiterbetrieben. Zum Beispiel weist das Lenksystem eine Lenkunterstützung auf, die mittels der elektrischen Energie betrieben wird. Somit ist die von einem Nutzer aufzubringende Kraft weiterhin vergleichsweise gering, sodass dieser das Kraftfahrzeug auch weiterhin sicher steuern kann. Alternativ wird bei dem Lenksystem beispielsweise eine Stellung eines Lenkrads und/oder eines sonstigen Eingabegeräts, anhand dessen die Fortbewegungsrichtung des Kraftfahrzeugs eingestellt werden soll, erfasst und ein Aktor angesteuert, mittels dessen ein Lenkeinschlag von Rädern des Kraftfahrzeugs eingestellt wird. Beispielsweise ist zwischen dem Lenkrad/Eingabegerät und den Rädern eine mechanische Kopplung vorhanden. Alternativ ist insbesondere keine mechanische Kopplung zwischen dem Lenkrad/Eingabegerät und dem Aktor und/oder den Rädern vorhanden. Aufgrund des Verfahrens ist dabei bei Ausfall der Batterieeinheit auch weiterhin ein Einstellen der Bewegungsrichtung des Kraftfahrzeugs ermöglicht, zumindest solange sich das Kraftfahrzeug bewegt, weswegen eine Sicherheit erhöht ist.

Alternativ oder in Kombination hierzu wird insbesondere ein Bremssystem weiterbetrieben, bei dem insbesondere mittels eines Sensors eine Stellung eines Eingabegeräts, wie eines Fußpedals, erfasst wird, anhand derer eine Ansteuerung von Bremsen des Kraftfahrzeugs erfolgt. Dabei werden beispielsweise Bremsbacken direkt und/oder ein Hydrauliksystem entsprechend der Stellung des Eingabegeräts/Fußpedals eingestellt. Vorzugsweise ist hierbei keine mechanische Kopplung zwischen dem Eingabegerät, wie dem Fußpedal, und dem Hydrauliksystem oder den Bremsbacken vorhanden. Alternativ hierzu ist eine mechanische und/oder hydraulische Kopplung zwischen dem Fußpedal und den Bremsen vorhanden, wobei insbesondere anhand der eingespeisten elektrischen Energie eine Bremsunterstützung weiterbetrieben wird, sodass eine von einem Nutzer aufzubringende Kraft vergleichsweise gering ist. Alternativ oder in Kombination hierzu erfolgt die Ansteuerung unabhängig von einer Betätigung des Nutzers/Fahrers, sodass das Kraftfahrzeug unabhängig hiervon zu einem Stillstand gebracht wird. Dabei wird aufgrund der Verwendung des Bremssystems das Kraftfahrzeug jeweils in einer vergleichsweise kurzen Zeitspanne zum Stillstand gebracht.

Beispielsweise wird sämtliche elektrische Energie, die mittels des Hauptantriebs in das Hochvoltbordnetz eingespeist wird, mittels des Gleichspannungswandlers in das Niedervoltbordnetz eingespeist. Alternativ hierzu umfasst das Kraftfahrzeug insbesondere eine Abbauschaltung, mittels derer weitere elektrische Energie abgebaut wird, die mittels des Hauptantriebs in das Hochvoltbordnetz eingespeist wird. Die Abbauschaltung ist eine Schaltung zum Abbau von elektrischer Energie, und mittels dieser wird insbesondere elektrische Energie in thermische Energie gewandelt. Zum Beispiel umfasst die Abbauschaltung einen elektrischen Widerstand, der hierfür zugeschaltet wird, und der insbesondere elektrisch parallel zum Hauptantrieb geschaltet wird. Auf diese Weise ist es möglich, mittels des Hauptantriebs ein vergleichsweise großes Bremsmoment aufzubringen, wobei eine elektrische Überlastung des Hochvoltbordnetzes, des Niedervoltbordnetzes und/oder des Gleichspannungswandlers vermieden wird.

Beispielsweise umfasst das Kraftfahrzeug lediglich einen einzigen Hauptantrieb. Alternativ hierzu umfasst das Kraftfahrzeug zweckmäßigerweise einen weiteren Hauptantrieb, der beispielsweise baugleich zu dem Hauptantrieb ausgestaltet ist, oder der sich zu diesem zum Beispiel unterscheidet. Insbesondere sind hierbei die beiden Hauptantrieb unterschiedlichen Rädern des Kraftfahrzeugs zugeordnet. Beispielsweise sind die beiden Hauptantriebe zueinander elektrisch parallel geschaltet, sodass mittels jedes der Hauptantrieb in einem generatorischen Betrieb elektrische Energie in das Hochvoltbordnetz eingespeist wird, mittels derer der Gleichspannungswandler gespeist werden kann. Alternativ hierzu ist der weitere Hauptantrieb geeigneterweise über einen separaten Anschluss mit dem Gleichspannungswandler verbunden, und mittels des weiteren Hauptantriebs wird bei einem generatorischen Betrieb insbesondere über den separaten Anschluss der Gleichspannungswandler gespeist.

Mit anderen Worten wird, sobald die elektrische Kontaktierung der Batterieeinheit mit dem Hochvoltbordnetz beendet wird, auch der weitere Hauptantrieb generatorisch betrieben, wobei die damit bereitgestellte elektrische Energie über den separaten Anschluss in den Gleichspannungswandler eingespeist wird. Somit ist hier eine Redundanz vorhanden, weswegen eine Sicherheit weiter erhöht ist. Insbesondere umfasst der Gleichspannungswandler hierfür eine geeignete Verschaltung, und dieser ist beispielsweise redundant aufgebaut, sodass die mittels der beiden Hauptantrieb bereitgestellte elektrischen Energie sicher in das Niedervoltbordnetz eingespeist werden kann. In einer Weiterbildung wird mit den beiden Hauptantrieben eine unterschiedliche elektrische Spannung bereitgestellt, sodass eine Redundanz realisiert ist, wobei eine Gegeneinanderarbeiten der etwaige Regler vermieden ist. Alternativ erfolgt ein abwechselndes Einspeisen der elektrischen Energie durch die beiden Hauptantrieb, sodass eine thermische Überlastung dieser vermieden wird.

Beispielsweise umfasst die Batterieeinheit zwei Unterbereiche, die mittels der Schalteinheit elektrisch in Reihe und auch elektrisch parallel schaltbar sind. Hierbei wird insbesondere mittels jeder der Unterbereiche eine elektrische Spannung von 400 V bereitgestellt. Im Normalbetrieb sind die beiden Unterbereiche zweckmäßigerweise elektrisch in Reihe geschaltet, sodass mittels des Hochvoltbordnetzes eine elektrische Spannung von 800 V bereitgestellt ist. Sofern eine Fehlfunktion eines der Unterbereiche vorliegt, wird insbesondere dieser Unterbereich mittels der Schalteinheit von dem Hochvoltbordnetz getrennt, sodass mittels dessen lediglich 400 V geführt werden. Somit ist dennoch eine Notbetrieb des Kraftfahrzeugs möglich. Insbesondere ist jedem der Unterbereiche jeweils einer der Hauptantriebe zugeordnet, sodass bei Aufheben der elektrischen Kontaktierung eines der Unterbereiche mit dem Hochvoltbordnetz mittels des verbleibenden Hauptantriebs bei einem generatorischen Betrieb elektrische Energie in das Hochvoltbordnetz eingespeist wird. Insbesondere ist jeder Hauptantrieb jeweils einem der Unterbereiche direkt zugeordnet, und mittels der Schalteinheit wird gemäß dem Verfahren zum Beispiel lediglich die elektrische Kontaktierung eines der Unterteile der Batterieeinheit mit dem Hochvoltbordnetz beendet, insbesondere desjenigen Unterbereichs, der eine Fehlfunktion aufweist. Somit ist mittels des verbleibenden Hauptantriebs sowie mittels des etwaigen Unterbereichs noch ein Speisen des Hochvoltbordnetzes ermöglicht.

Das Kraftfahrzeug ist beispielsweise ein Personenkraftwagen (Pkw), ein Lastkraftwagen (Lkw) oder ein Bus. In einer weiteren Alternative ist das Kraftfahrzeug ein Flurförderfahrzeug. Das Kraftfahrzeug weist ein Hochvoltbordnetz auf. Hierbei ist das Hochvoltbordnetz geeignet, insbesondere vorgesehen und eingerichtet, eine elektrische Gleichspannung zu führen, die zweckmäßigerweise größer als 200 V, 300 oder 350 V ist. Insbesondere ist das Hochvoltbordnetz derart ausgestaltet, dass an diesem unterschiedliche Spannungsniveaus anliegen können. Das Kraftfahrzeug weist einen elektromotorischen Hauptantrieb auf, der dem Vortrieb des Kraftfahrzeuges dient, und der mittels des Hochvoltbordnetzes gespeist ist. Vorzugsweise ist ein Elektromotor des Hauptantriebs über einen Umrichter des Hauptantriebs mit dem Hochvoltbordnetz elektrisch verbunden. Zumindest jedoch ist der Hauptantrieb mittels des Hochvoltbordnetzes gespeist. Vorzugsweise handelt es sich somit bei dem Kraftfahrzeug um ein Elektrofahrzeug oder ein Brennstoffzellen(Wasserstoff)-Fahrzeug. Zweckmäßigerweise umfasst das Kraftfahrzeug eines oder mehrere Nebenaggregate, wie ein Klimakompressor, das ebenfalls mittels des Hochvoltbordnetzes betrieben ist. Mit anderen Worten sind mittels des Hochvoltbordnetzes auch weitere Verbraucher betrieben.

Das Kraftfahrzeug weist ferner ein Niedervoltbordnetz auf, das geeignet, insbesondere vorgesehen und eingerichtet ist, eine im Vergleich zum Hochvoltbordnetz verringerte elektrische Spannung, nämlich eine Gleichspannung, zu führen. Dabei beträgt die elektrische Spannung geeigneterweise 12 V, 24 V oder 48 V. Die im Normalbetrieb mittels des Niedervoltbordnetz geführte elektrische Spannung ist hierbei geringer als die im Normalbetrieb mittels des Hochvoltbordnetzes geführte elektrische Spannung, wobei diese auch insbesondere kleiner als 60 V ist und zum Beispiel 48 V beträgt. Insbesondere sind mittels des Niedervoltbordnetzes ein oder mehrere Nebenaggregate des Kraftfahrzeugs, also Verbraucher betrieben, die beispielsweise dem Komfort dienen, wie zum Beispiel ein Multimediasystem, oder ein Bordcomputer. Zweckmäßigerweise sind mittels des Niedervoltbordnetzes auch ein Lenksystem und/oder ein Bremssystem betrieben, die insbesondere als sogenannte "X by wire"-System ausgestaltet sind.

Das Hochvoltbordnetz und das Niedervoltbordnetz sind mittels eines Gleichspannungswandlers verbunden und somit elektrisch miteinander kontaktiert. Mittels des Gleichspannungswandlers ist es hierbei möglich, elektrische Energie von dem Hochvoltbordnetz in das Niedervoltbordnetz zu übertragen, sodass der Gleichspannungswandler als Tiefsetzsteller wirkt. Hierfür wird die in dem Hochvoltbordnetz anliegende elektrische Spannung auf ein Spannungsniveau transferiert, die der im Niedervoltbordnetz anliegenden elektrischen Spannung entspricht oder zumindest zu dieser korrespondiert. Somit ist es beispielsweise möglich, einen dem Niedervoltbordnetz zugeordneten Energiespeicher mittels des Hochvoltbordnetzes zu laden. Zudem ist es beispielsweise möglich, den Gleichspannungswandler als Hochsetzsteller zu betreiben und elektrische Energie von dem Niedervoltbordnetz in das Hochvoltbordnetz einzuspeisen. Hierfür wird die mittels des Niedervoltbordnetzes bereitgestellte elektrische Spannung erhöht, vorzugsweise auf die in dem Hochvoltbordnetz geführte elektrische Spannung.

Das Kraftfahrzeug umfasst ferner eine Batterieeinheit und eine Schalteinheit, wobei das Hochvoltbordnetz über die Schalteinheit mit der Batterieeinheit verbunden ist, also elektrisch verbunden und somit elektrisch kontaktiert ist. Somit ist es möglich, mittels der Schalteinheit die elektrische Kontaktierung der Batterieeinheit mit dem Hochvoltbordnetz einzustellen oder auch zu unterbrechen, je nach Einstellung der Schalteinheit. Insbesondere weist die Schalteinheit hierfür einen oder mehrere Schalter auf, die zum Beispiel nach Art eines Schützes ausgestaltet sind. Zweckmäßigerweise umfasst die Schalteinheit eine Sicherung, sodass bei einer Fehlfunktion der Batterieeinheit diese von Hochvoltbordnetz getrennt wird. Insbesondere weist die Batterieeinheit zwei Anschlüsse auf, von denen jeder jeweils einem der elektrische Potentiale des Hochvoltbordnetzes zugeordnet ist. Zweckmäßigerweise ist dabei jedem Anschluss der Batterieeinheit oder zumindest dem, mittels dessen das positive elektrische Potential bereitgestellt wird, einer der Schalter zugeordnet.

Die Batterieeinheit umfasst eine oder mehrere Batterien, die jeweils zum Beispiel eine oder mehrere galvanische Elemente umfassen. Insbesondere sind hierbei die Batterien wiederaufladbar ausgestaltet und somit Sekundärbatterien. Zum Beispiel sind die Batterien direkt elektrisch parallel oder und/oder in Reihe geschaltet. Alternativ hierzu sind die Batterien zu Batteriemodulen zusammengefasst und hierfür beispielsweise elektrisch in Reihe und/oder parallel geschaltet. Die Batteriemodule wiederum sind beispielsweise zueinander elektrisch parallel und/oder teilweise in Reihe geschaltet.

Das Kraftfahrzeug ist gemäß einem Verfahren betrieben, beim dem mittels der Schalteinheit eine elektrische Kontaktierung der Batterieeinheit mit dem Hochvoltbordnetz beendet wird. Anschließend wird der Hauptantrieb generatorisch betrieben, sodass elektrische Energie in das Hochvoltbordnetz eingespeist wird, mittels derer über den Gleichspannungswandler das Niedervoltbordnetz gespeist wird.

Das Kraftfahrzeug umfasst vorzugsweise ein Steuergerät, das geeignet, zweckmäßigerweise vorgesehen und eingerichtet, ist, das Verfahren durchzuführen. Das Steuergerät ist hierbei beispielsweise mittels eines einzigen Geräts realisiert oder auf unterschiedliche Geräte aufgeteilt. Die Erfindung betrifft ebenfalls ein derartiges Steuergerät. Zum Beispiel ist das Steuergerät ein Bestandteil eines Batteriemanagementsystems. Das Steuergerät ist beispielsweise als anwendungsspezifischer Schaltkreis (ASIC) ausgestaltet oder umfasst einen programmierbaren Computer, wie einen Mikroprozessor. Insbesondere umfasst das Steuergerät einen Speicher, auf dem ein Computerprogrammprodukt gespeichert ist, das bei Ausführung des Programms durch einen Computer, insbesondere den Mikroprozessor, diesen veranlassen, das Verfahren durchzuführen.

Die Batterieeinheit weist zum Beispiel zwei Unterbereiche auf, die mittels der Schalteinheit verschaltet sind. Insbesondere ist es hierbei möglich, die beiden Unterbereiche elektrisch parallel und elektrisch in Reihe zu schalten, je nach Einstellung der Schalteinheit. Beispielsweise sind die Unterbereiche zueinander baugleich, und/oder die Batterieeinheit weist noch weitere derartige Unterbereiche auf. Jeder Unterbereich weist zweckmäßigerweise zwei Unteranschlüsse auf, an denen bei Betrieb eine elektrische Spannung anliegt, die insbesondere anhand der Verschaltung der Batterien jedes Unterbereich vorgegeben ist. Mittels der Schalteinheit ist es möglich, die beiden Unterbereiche elektrisch in Reihe oder elektrisch parallel zu schalten, sodass je nach Verschaltung an den Anschlüssen der Batterieeinheit insbesondere entweder das Doppelte der mittels jedes der Unterbereichen bereitgestellten elektrischen Spannung oder die mittels eines der Unterbereiche bereitgestellte elektrische Spannung anliegt. Zusammenfassend ist es mittels der Schalteinheit somit möglich, die Unterbereiche entweder elektrisch in Reihe oder elektrisch parallel zu schalten, insbesondere wahlweise und/oder in Abhängigkeit von aktuellen Anforderungen.

Vorzugsweise ist das Kraftfahrzeug derart ausgestaltet, dass im Normalbetrieb, also wenn dieses bewegt oder bestimmungsgemäß genutzt wird, die Unterbereiche elektrisch in Reihe geschaltet sind. Insbesondere liegt hierbei an der Batterieeinheit und somit auch am Hochvoltbordnetz eine elektrische Spannung von 800 V an, und mittels jedes Unterbereichs wird somit eine elektrische Gleichspannung von 400 V im Normalbetrieb zur Verfügung gestellt. Beispielsweise wird zum Aufheben der elektrischen Kontaktierung der Batterieeinheit mit dem Hochvoltbordnetz zumindest einer der Unterbereiche, vorzugsweise beide oder sämtliche, von dem Hochvoltbordnetz getrennt und somit die elektrische Kontaktierung beendet.

Das Computerprogrammprodukt umfasst eine Anzahl an Befehle, die bei der Ausführung des Computerprogrammprodukts, auch lediglich als Programm bezeichnet, durch einen Computer diesen veranlassen, ein Verfahren zum Betrieb eines Kraftfahrzeugs, das ein Hochvoltbordnetz und ein Niedervoltbordnetz umfasst, die mittels eines Gleichspannungswandlers verbunden sind, wobei das Hochvoltbordnetz über eine Schalteinheit mit einer Batterieeinheit verbunden ist, und wobei ein elektromotorischer Hauptantrieb mittels des Hochvoltbordnetz gespeist ist, durchzuführen. Dabei wird mittels der Schalteinheit eine elektrische Kontaktierung der Batterieeinheit mit dem Hochvoltbordnetz beendet, und der Hauptantrieb wird generatorisch betrieben, sodass elektrische Energie in das Hochvoltbordnetz eingespeist wird, mittels derer über den Gleichspannungswandler das Niedervoltbordnetz gespeist wird. Der Computer ist zweckmäßigerweise ein Bestandteil eines Steuergeräts oder Elektronik und beispielsweise mittels dieser gebildet. Der Computer umfasst vorzugsweise einen Mikroprozessor oder ist mittels dessen gebildet. Das Computerprogrammprodukt ist beispielsweise eine Datei oder ein Datenträger, der ein ausführbares Programm enthält, das bei einer Installation auf einem Computer das Verfahren automatisch ausführt.

Die Erfindung betrifft ferner ein Speichermedium, auf dem das Computerprogrammprodukt gespeichert ist. Ein derartiges Speichermedium ist beispielsweise eine CD-ROM, eine DVD oder eine Blu-Ray Disc. Alternativ hierzu ist das Speichermedium eine SD-Karte, ein USB-Stick oder ein sonstiger Speicher, der zum Beispiel wiederbeschreibbar oder lediglich einmalig beschreibbar ist. Ein derartiger Speicher ist beispielsweise ein Flash Speicher, ein RAM oder ein ROM.

Die im Zusammenhang mit dem Verfahren erläuterten Weiterbildungen und Vorteile sind sinngemäß auch auf das Kraftfahrzeug / das Steuergerät das Computerprogrammprodukt/ das Speichermedium sowie untereinander zu übertragen und umgekehrt.

Nachfolgend werden Ausführungsbeispiele der Erfindung anhand einer Zeichnung näher erläutert. Darin zeigen:
- Fig. 1: schematisch vereinfacht ein Kraftfahrzeug,
- Fig. 2: ein Verfahren zum Betrieb des Kraftfahrzeugs, und
- Fig. 3: eine alternative Ausführungsform des Kraftfahrzeugs.

Einander entsprechende Teile sind in allen Figuren mit den gleichen Bezugszeichen versehen.

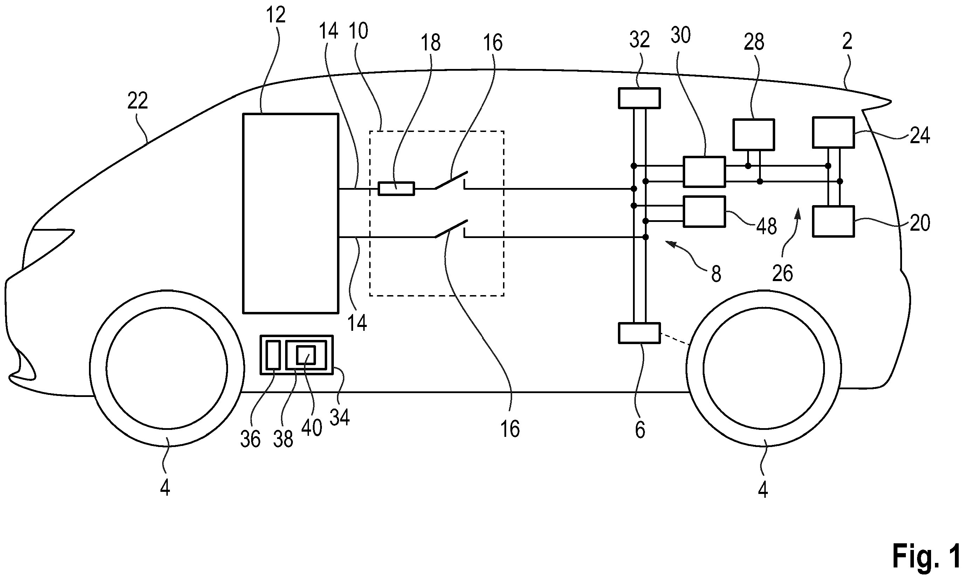

In Figur 1 ist schematisch vereinfacht ein Kraftfahrzeug 2 in Form eines Personenkraftwagens (Pkw) dargestellt. Das Kraftfahrzeug 2 weist mehrere Räder 4 auf, mittels derer ein Kontakt zu einer nicht näher dargestellten Fahrbahn erfolgt. Zumindest einige der Räder 4 sind mittels eines Hauptantriebs 6 angetrieben der einen Elektromotor umfasst. Somit handelt es sich bei dem Hauptantrieb 6 um einen elektromotorischen Hauptantrieb. Zudem weist der Hauptantrieb 6 einen Umrichter, nämlich einen Pulswechselrichter, auf, mittels dessen die für die Bestromung des Elektromotors erforderliche elektrische Spannung bereitgestellt wird. Der Umrichter selbst ist mittels eines Hochvoltbordnetzes 8 bestromt, also betrieben, mittels dessen im Normalbetrieb eine elektrische Gleichspannung von 800 V bereitgestellt wird.

Das Hochvoltbordnetz 8 ist über eine Schalteinheit 10 mit einer Batterieeinheit 12 verbunden. Hierbei wird mittels der Batterieeinheit 12 im Normalbetrieb an zwei Anschlüssen 14 eine elektrische Gleichspannung von 800 V bereitgestellt. Jeder Anschluss 14 ist über einen Schalter 16 der Schalteinheit 10 mit jeweils einem der elektrischen Pole des Hochvoltbordnetzes 8 verbunden. Mittels Öffnens bereits eines der Schalter 16 wird die elektrische Kontaktierung der Batterieeinheit 12 mit dem Hochvoltbordnetz 8 beendet und somit die Batterieeinheit 12 von dem Hochvoltbordnetz 8 getrennt, wobei bei Verwendung lediglich eines der Schalter 16 jedoch keine galvanische Trennung realisiert wird. Zu einem der Schalter 16 ist zudem eine elektrische Sicherung 18 der Schalteinheit 10 in Reihe geschaltet, sodass bei einer Fehlfunktion dennoch eine elektrische Dekontaktierung der Batterieeinheit 12 von dem Hochvoltbordnetz 8 erfolgt. Im Normalbetrieb des Kraftfahrzeugs 2 wird für den Betrieb des Hauptantriebs 6 über die Schalteinheit 10 der Batterieeinheit 16 elektrische Energie entnommen, sodass das Kraftfahrzeug 2 bewegt wird. Bei einem Abbremsen des Kraftfahrzeugs 2 hingegen wird in einem generatorischen Betrieb des Hauptantriebs 6 Rotationsenergie der Räder 4 in elektrische Energie gewandelt, die über die Schalteinheit 10 in die Batterieeinheit 12 eingespeist wird.

Mit zumindest einigen der Räder 4 ist ein Lenksystem 20 in Wirkverbindung. Das Lenksystem 20 weist einen Aktor auf, mittels des ein Lenkeinschlag der zugeordneten Räder 4 bezüglich einer Karosserie 22 des Kraftfahrzeugs 2 eingestellt werden kann, sodass eine Fortbewegungsrichtung des Kraftfahrzeugs 2 geändert wird. Der Aktor selbst ist mittels einer elektrischen Leitung mit einem Sensor verbunden, der einem Eingabegerät, nämlich einem Lenkrad, zugeordnet ist. Die Einstellung des Aktors erfolgt in Abhängigkeit der mittels des Sensors bereitgestellten elektrischen Signale. Eine direkte mechanische Kopplung des Lenkrads mit den Rädern hingegen ist nicht vorhanden. Mit anderen Worten ist das Lenksystem 20 als ein "X by wire"-System ausgestaltet.

Auch weist das Kraftfahrzeug 2 ein Bremssystem 24 auf. Das Bremssystem 24 umfasst mehrere elektrische Bremsen, von denen jedem der Räder 4 jeweils eine zugeordnet ist. Die Bremsen weisen jeweils eine Bremsscheibe sowie elektrisch angetriebene Bremsbelege auf, die gegen die Bremsscheibe verfahren werden können. Ferner weist das Bremssystem 24 ein Bremspedal auf, dem ein Sensor zugeordnet ist. Der Sensor ist elektrisch mit den Bremsen verbunden, die in abhängig der Stellung des Bremspedals angesteuert werden. Somit ist auch das Bremssystem 24 als ein "X by wire"-System ausgestaltet. Das Lenksystem 20 sowie das Bremssystem 24 sind mittels eines Niedervoltbordnetzes 26 elektrisch verbunden und somit mittels dessen betrieben. Ferner ist mit dem Niedervoltbordnetz 26, mittels dessen bei Normalbetrieb eine elektrische Gleichspannung von 48 V geführt wird, ein Verbrauch 28 verbunden, wie eine Multimediaanlage.

Das Niedervoltbordnetz 26 und das Hochvoltbordnetzes 8 sind über einen Gleichspannungswandler 30 verbunden, mittels dessen ein Austausch von elektrischer Energie zwischen dem Niedervoltbordnetz 26 und dem Hochvoltbordnetz 8 ermöglicht ist. So ist möglich, das Niedervoltbordnetz 26 mittels der Batterieeinheit 12 über das Hochvoltbordnetz 8 und den Gleichspannungswandler 30 zu speisen. Mit dem Hochvoltbordnetz 8 ist ferner ein anderer Verbraucher 32 betrieben. Mit anderen Worten wird für den Betrieb des Verbrauchers 32 die mittels des Hochvoltbordnetzes 8 bereitgestellte elektrische Gleichspannung verwendet. Der Verbraucher 32 des Hochvoltbordnetzes 8 weist dabei einen erhöhten Energiebedarf auf und ist beispielsweise eine elektrischer Zuheizer.

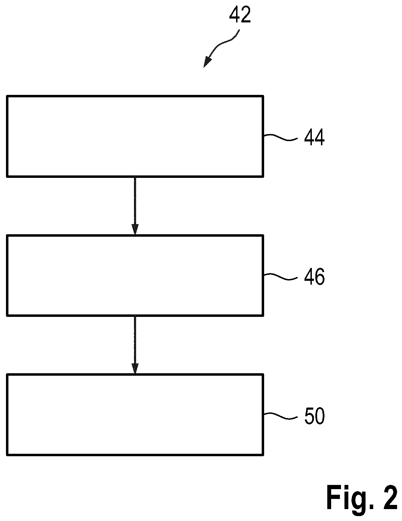

Ferner weist das Kraftfahrzeug ein Steuergerät 34 auf, das einen Computer 36 in Form eines programmierbaren Mikroprozessors umfasst. Auch weist das Steuergerät 34 ein Speichermedium in Form eines Speichers 38 auf, auf dem ein Computerprogrammprodukt 40 gespeichert ist. Hierbei wird bei Ausführung des Programms 40 durch den Computer 36 dieser veranlasst, ein in Figur 2 dargestelltes Verfahren 42 zum Betrieb des Kraftfahrzeugs 2 durchzuführen. Mit anderen Worten ist das Steuergerät 34 vorgesehen und eingerichtet, das Verfahren 42 durchzuführen, und das Kraftfahrzeug 2 ist gemäß dem Verfahren 42 betrieben.

Das Verfahren 42 beginnt in einem ersten Arbeitsschritt 44, der gestartet wird, wenn ein Notbetrieb vorliegt. Bei diesem wird das Kraftfahrzeug 2 noch bewegt, jedoch liegt ein Fehler der Batterieeinheit 12 vor, sodass ein sicherer Weiterbetrieb der Batterieeinheit 12 nicht möglich ist. In dem ersten Arbeitsschritt 44 wird mittels der Schalteinheit 10 die elektrische Kontaktierung der Batterieeinheit 12 mit in dem Hochvoltbordnetz 8 beendet. Hierfür werden beiden Schalter 16 betätigt und somit die elektrische Kontaktierung aufgehoben. Falls aufgrund eines vergleichsweise umfangreichen Defekts einer der beiden Schalter 16 ebenfalls eine Fehlfunktion aufweisen sollte, wird zumindest der andere der beiden Schalter 16 entsprechend betätigt und auf diese Weise die Kontaktierung beendet. Falls beide Schalter 16 eine Fehlfunktion aufweisen, ist mittels der Sicherung 18 ein Aufheben der elektrischen Kontaktierung möglich. Die Sicherung 18 ist dabei derart gewählt, dass diese bei einer Fehlfunktion der Batterieeinheit 12 und einem Versagen der Schalter 16 auslöst.

Ferner werden der Verbraucher 32 des Hochvoltbordnetzes 8 sowie der Verbraucher 28 des Niedervoltbordnetzes 26 stillgesetzt und somit nicht weiter betrieben. Somit erfolgt mittels dieser keine weitere Entnahme von elektrischer Energie aus dem Hochvoltbordnetz 8 sowie dem Niedervoltbordnetz 26. Mittels etwaiger Kapazitäten dieser beiden Verbraucher 28, 32 hingegen erfolgt zumindest kurzfristig noch eine Stabilisierung der elektrischen Spannung des Hochvoltbordnetzes 8 sowie des Niedervoltbordnetzes 26.

Das Lenksystem 20 und das Bremssystem 24 werden noch weiter betrieben, sodass eine etwaige Betätigung des Lenkrads oder des Bremspedals zu einer Richtungsänderung des Kraftfahrzeugs 2 bzw. zum Abbremsen des Kraftfahrzeugs 2 führen, obwohl keine mechanische Kopplung zwischen diesen vorhanden ist, und obwohl die bei den Bordnetze 8, 26 nicht mehr mit elektrischer Energie gespeist werden. Mittels des Gleichspannungswandlers 30 erfolgt dabei eine Stabilisierung der mittels des Niedervoltbordnetzes 26 geführten elektrischen Spannung, wofür dem Hochvoltbordnetz 8 elektrische Energie entnommen wird. Mit anderen Worten wird der Gleichspannungswandler 30 ebenfalls weiter betrieben. Zusammenfassend wird mittels des Lenksystems 20 und des Bremssystems 24 dem Niedervoltbordnetz 26 elektrische Energie entzogen, die mittels des Gleichspannungswandlers 30 nachgespeist wird, wofür dem Hochvoltbordnetz 8 elektrische Energie entzogen wird.

Falls keine weitere Einspeisung von elektrischer Energie in das Hochvoltbordnetz 8 erfolgen würde, würde nachdem die verbleibende elektrische Spannung des Hochvoltbordnetzes 8 sowie des Niedervoltbordnetz 26 abgebaut ist, eine Betätigung des Lenkrads und des Fußpedals nicht zu einer entsprechenden Beeinflussung der Fortbewegung des Kraftfahrzeugs 2 mehr führen, da keine elektrische Energie mehr zum Betrieb des jeweiligen Aktors und/oder auch des Sensors des jeweils als "X by wire"-System ausgestalteten Lenksystems 20 und Bremssystems 24 mehr zur Verfügung steht.

In einem sich anschließenden zweiten Arbeitsschritt 46 wird der Hauptantrieb 6 generatorisch betrieben und hierfür der Betriebsmodus des Hauptantriebs 6 geändert. Bei diesem wird mittels des Umrichters dem Hochvoltbordnetz 8 keine elektrische Energie mehr entnommen, sondern der Elektromotor wird generatorisch betrieben, sodass mittels dessen eine elektrische Spannung bereitgestellt wird. Diese wird mittels des Umrichters des Hauptantriebs 6 in das Hochvoltbordnetz 8 eingespeist. Dabei wird der Umrichter und somit der Hauptantrieb 6 derart betrieben, dass an diesen eine bestimmte elektrische Spannung anliegt. Hierbei erfolgt eine Regelung des Hauptantriebs 6 zur Bereitstellung der bestimmten elektrischen Spannung, wofür ein Bremsmoment des Hauptantriebs 6 entsprechend angepasst wird. Im Vergleich hierzu wird bei einer Rückspeisung im Normalbetrieb das Bremsmoment des Hauptantriebs 6 vorgegeben, und auf dieses wird geregelt.

Die bestimmte Spannung entspricht dabei zunächst der elektrischen Spannung, die an dem Hochvoltbordnetz 8 zu Beginn des generatorischen Betriebs anliegt, sodass ein ausbilden von Spannungsspitzen vermieden ist. Die anliegende elektrische Spannung ist dabei aufgrund der Selbstentladung von dem Hochvoltbordnetz 8 zugeordneten Kapazitäten sowie aufgrund des weiteren Betriebs des Lenksystems 20 und des Bremssystems 24 reduziert. Die bestimmte Spannung wird auf die im Normalbetrieb des Kraftfahrzeugs 2 am Hochvoltbordnetz 8 anliegende elektrische Spannung angepasst, also auf 800 V, wofür eine lineare Anpassung herangezogen wird. Somit wird nach einer bestimmten Zeitspanne mittels des Hauptantriebs 6 die am Hochvoltbordnetz 8 anliegende elektrische Spannung bei im Wesentlichen 800 V stabilisiert, sodass der Gleichspannungswandler 30 weiterhin an dessen optimal Betriebspunkt betrieben werden kann und dort entstehenden Verlusten reduziert sind. Während des zweiten Arbeitsschritts 46 wird dabei dem Hochvoltbordnetz 8 mittels des Gleichspannungswandlers 30 weiterhin Energie entnommen, um den Energieverlust aus dem Niedervoltbordnetz 26 auszugleichen, der aufgrund des Weiterbetrieb des Lenksystems 20 und Bremssystems 24 hervorgerufen wird.

Zusammenfassend wird somit der Hauptantrieb 6 generatorisch betrieben, sodass elektrische Energie in das Hochvoltbordnetz 8 eingespeist wird. Mittels derer wird über den Gleichspannungswandler 30 das Niedervoltbordnetz 26 gespeist, aus dem aufgrund des weiteren Betriebs des Lenksystems 20 und des Bremssystems 24 eine Energieentnahme erfolgt. Somit ist auch bei Ausfall der Batterieeinheit 12 dennoch ein Lenken und Bremsen des Kraftfahrzeugs 2 für einen Fahrer ermöglicht.

Falls das Kraftfahrzeug 2 bei Beginn des Verfahrens 42 mit einer vergleichsweise hohen Geschwindigkeit bewegt wurden, und lediglich geringen Lenk- und/oder Bremseingriffe erfolgen, wird aufgrund der geringen Energieentnahme aus den beiden Bordnetzen 8, 26 das Kraftfahrzeug 2 trotz des generatorischen Betriebs des Hauptantriebs 6 lediglich gering abgebremst. In diesem Fall wird eine Regelung des Hauptantriebs 6 abgeändert, sodass mittels dessen weitere Energie in das Hochvoltbordnetz 8 eingespeist wird. Die weitere Energie ist dabei nicht für den Betrieb des Gleichspannungswandlers 30 sowie des Lenksystems 20 und des Bremssystems 24 erforderlich. Um einen Anstieg der an dem Bordnetz 8 anliegenden elektrische Spannung zu verhindern, wird eine Abbauschaltung 48 aktiviert, die einen elektrischen Widerstand aufweist, die in Reihe zu einem Schaltelement geschaltet ist. Diese sind hierbei zwischen die beiden Pole des Hochvoltbordnetzes 8 geschaltet. Bei Aktivierung der Abbauschaltung 48 wird das Schaltelement geschlossen, das anderweitig stets geöffnet ist. Infolgedessen wird die sich ergebende elektrische Spannung des Hochvoltbordnetzes 8 über die Abbauschaltung 48 zumindest teilweise abgebaut, und die weitere Energie wird in thermische Energie gewandelt. Somit ist auch ein vergleichbares effektives Abbremsen des Kraftfahrzeugs 2 möglich, wenn beispielsweise der Fahrer das Bremssystem 24 nicht betätigt, oder falls dieses ebenfalls ausgefallen ist.

Der zweite Arbeitsschritt 46 wird so lange durchgeführt, wie das Kraftfahrzeug 2 bewegt wird. Falls dieses stillsteht, ist der generatorische Betrieb des Hauptantriebs 6 nicht mehr möglich. Dann wird ein dritter Arbeitsschritt 50 durchgeführt. Mit anderen Worten wird der dritte Arbeitsschritt 50 durchgeführt, wenn das Kraftfahrzeug 2 stillsteht und sich somit in einem sicheren Zustand befindet. In dem dritten Arbeitsschritt 50 wird eine noch in etwaigen Kapazitäten vorhandene elektrische Energie abgebaut, beispielsweise über die Abbauschaltung 48, oder ein Funksystem wird zum Absetzen eines Notrufs angesteuert. Nach Abbau der verbleibenden elektrische Energie des Hauptantriebs 6, wird das Verfahren 42 beendet. Bei einer Weiterbildung wird der Notruf bereits im zweiten Arbeitsschritt 46 einmalig oder kontinuierlich abgesetzt.

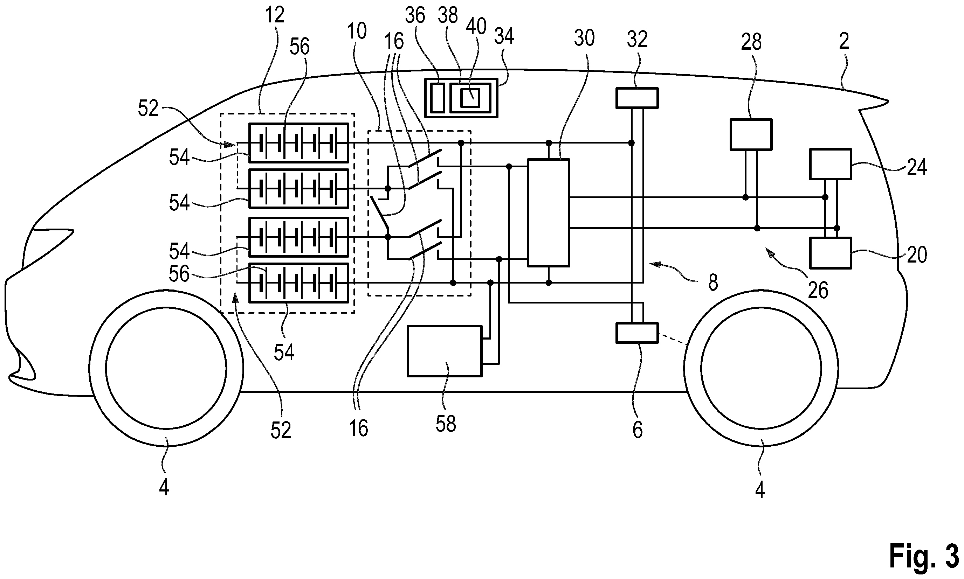

In Figur 3 ist eine alternative Ausgestaltungsform des Kraftfahrzeugs 2 dargestellt, wobei hauptsächlich die Batterieeinheit 12 sowie die Schalteinheit 10 abgeändert sind. Das Niedervoltbordnetz 26, das Lenksystem 20, das Bremssystem 24 und der Verbraucher 28 des Niedervoltbordnetzes 26 sind hingegen nicht verändert. Auch ist der Verbraucher 32 des Hochvoltbordnetzes 8 nicht abgeändert, wobei jedoch in dieser Ausgestaltungsform die Abbauschaltung 48 weggelassen ist. Auch ist weiterhin das Steuergerät 34 mit dem Computer 36 und dem Speicher 38 vorhanden. Das Computerprogramm 40 umfasst weiterhin die Befehle, die den Computer 36 bei Ausführung veranlassen, das Verfahren 42 durchzuführen, wobei dieses jedoch auf die geänderte Ausgestaltung des Kraftfahrzeugs 2 angepasst ist.

Die Batterieeinheit 12 weist zwei zueinander baugleiche Unterbereiche 52 auf, die jeweils mehrere Batteriemodul 54 umfassen, von denen jeweils lediglich zwei dargestellt sind. Die Batteriemodule 54 jedes Unterbereichs 52 sind elektrisch in Reihe geschaltet, und jedes der zueinander baugleichen Batteriemodule 54 weist mehrere Batteriezellen 56 auf, die elektrisch in Reihe geschaltet sind. Bei der in Figur 2 gezeigten Ausgestaltungsform sind ebenfalls die Batteriemodule 54 mit den Batteriezellen 56 vorhanden, jedoch sind diese nicht auf die beiden Unterbereiche 52 aufgeteilt.

Die Schalteinheit 10 weist nunmehr insgesamt fünf Schalter 16 auf, mittels derer die beiden Unterbereiche 52 elektrisch parallel oder elektrisch in Reihe schaltbar sind, sodass an dem Hochvoltbordnetz 8 entweder eine elektrische Spannung von 800 V oder 400 V anliegt. Ferner ist es mittels der Schalter 16 möglich, für jeden der Unterbereiche 52 die elektrische Kontaktierung mit dem Hochvoltbordnetz 8 separat zu beenden, wofür für zumindest einen der Pole jedes der Unterbereiche 52 die elektrische Kontaktierung beendet wird.

Der Hauptantrieb 6, mittels dessen einige der Räder 4 angetrieben sind, ist unverändert vorhanden und mit einem entsprechenden Anschluss der Schalteinheit 10 verschaltet. Zusätzlich ist ein weiterer Hauptantrieb 58 vorhanden, mittels dessen die verbleibenden Räder 6 angetrieben sind. Der weitere Hauptantrieb 58 ist dabei zumindest teilweise mit anderen Anschlüssen der Schalteinheit 10 verbunden. Die beiden Hauptantriebe 6, 58 sind über jeweils separate Anschlüsse mit dem Gleichspannungswandler 30 verbunden, der zumindest teilweise redundant aufgebaut ist.

Im Normalbetrieb werden die beiden Hauptantriebe 6, 58 mittels der Batterieeinheit 12 über das Hochvoltbordnetz 8 betrieben, sodass das Kraftfahrzeug 2 bewegt wird. Auch ist in diesem Fall ein Normalbetrieb des Lenksystems 20 und des Bremssystems 24 möglich. Sobald der Notbetrieb eintritt, wird ebenfalls das Verfahren 42 durchgeführt, wobei die nach Schwere des Fehlers der Batterieeinheit 12 die elektrische Kontaktierung eines der Unterbereiche 52 oder beider Unterbereiche 52 mit dem Hochvoltbordnetz 8 beendet wird.

Im zweiten Arbeitsschritt 46 werden beide Hauptantriebe 6, 58 generatorisch betrieben, wobei mittels dieser unabhängig der Gleichspannungswandler 30 gespeist wird. Somit ist auch hier ein Weiterbetrieb des Lenksystems 30 und des Bremssystems 24 in dem zweiten Arbeitsschritt 46 möglich, auch bei einem Ausfall eines der Hauptantriebe 6, 58, sodass eine Redundanz gegeben ist.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den einzelnen Ausführungsbeispielen beschriebene Einzelmerkmale auch auf andere Weise miteinander kombinierbar, ohne den Gegenstand der Erfindung zu verlassen.

### Bezugszeichenliste

- 2: Kraftfahrzeug
- 4: Rad
- 6: Hauptantrieb
- 8: Hochvoltbordnetz
- 10: Schalteinheit
- 12: Batterieeinheit
- 14: Anschluss
- 16: Schalter
- 18: Sicherung
- 20: Lenksystem
- 22: Karosserie
- 24: Bremssystem
- 26: Niedervoltbordnetz
- 28: Verbraucher des Niedervoltbordnetzes
- 30: Gleichspannungswandler
- 32: Verbraucher des Hochvoltbordnetz
- 34: Steuergerät
- 36: Computer
- 38: Speicher
- 40: Computerprogrammprodukt
- 42: Verfahren
- 44: erster Arbeitsschritt
- 46: zweiter Arbeitsschritt
- 48: Abbauschaltung
- 50: dritter Arbeitsschritt
- 52: Unterbereich
- 54: Batteriemodul
- 56: Batteriezelle
- 58: weitere Hauptantrieb

## Patentansprüche

1. Verfahren (42) zum Betrieb eines Kraftfahrzeugs (2), das ein Hochvoltbordnetz (8) und ein Niedervoltbordnetz (26) umfasst, die mittels eines Gleichspannungswandlers (30) verbunden sind, wobei das Hochvoltbordnetz (8) über eine Schalteinheit (10) mit einer Batterieeinheit (12) verbunden ist, und wobei ein elektromotorischer Hauptantrieb (6) mittels des Hochvoltbordnetz (8) gespeist ist, bei welchem
- mittels der Schalteinheit (10) eine elektrische Kontaktierung der Batterieeinheit (12) mit dem Hochvoltbordnetz (8) beendet wird, und
- der Hauptantrieb (6) generatorisch betrieben wird, sodass elektrische Energie in das Hochvoltbordnetz (8) eingespeist wird, mittels derer über den Gleichspannungswandler (30) das Niedervoltbordnetz (26) gespeist wird.

2. Verfahren (42) nach Anspruch 1,
**dadurch gekennzeichnet,**
**dass** der Hauptantrieb (6) derart betrieben wird, dass an diesem eine bestimmte elektrische Spannung anliegt.

3. Verfahren (42) nach Anspruch 1 oder 2,
**dadurch gekennzeichnet,**
**dass** ein Teil von mittels des Hochvoltbordnetzes (8) und/oder des Niedervoltbordnetzes (26) gespeisten Verbrauchern (28, 32) stillgesetzt wird.

4. Verfahren (42) nach Anspruch 3,
**dadurch gekennzeichnet,**
**dass** ein Lenk- und/oder Bremssystem (20, 24) weiter betrieben wird.

5. Verfahren (42) nach einem der Ansprüche 1 bis 4,
**dadurch gekennzeichnet,**
**dass** mittels des Hauptantriebs (6) weitere elektrische Energie in das Hochvoltbordnetz (8) eingespeist wird, die mittels einer Abbauschaltung (48) abgebaut wird.

6. Verfahren (42) nach einem der Ansprüche 1 bis 5,
**dadurch gekennzeichnet,**
**dass** mittels eines weiteren Hauptantriebs (58) über einen separaten Anschluss der Gleichspannungswandler (30) gespeist wird.

7. Kraftfahrzeug (2), das ein Hochvoltbordnetz (8) und ein Niedervoltbordnetz (26) umfasst, die mittels eines Gleichspannungswandlers (30) verbunden sind, wobei das Hochvoltbordnetz (8) über eine Schalteinheit (10) mit einer Batterieeinheit (12) verbunden ist, und wobei ein elektromotorischer Hauptantrieb (6) mittels des Hochvoltbordnetz (8) gespeist ist, und das gemäß einem Verfahren (42) nach einem der Ansprüche 1 bis 6 betrieben ist.

8. Computerprogrammprodukt (40) umfassend Befehle, die bei der Ausführung des Programms durch einen Computer (36) diesen veranlassen, ein Verfahren (42) nach einem der Ansprüche 1 bis 6 auszuführen.
